# DEMANDE DE BREVET EUROPEEN

(11) **EP 2 290 876 A1**
(43) Date de publication de la demande: **02.03.2011**
(21) Numéro de dépôt: 09305782.6
(22) Date de dépôt: 24.08.2009
(51) Int. Cl.: H04L 9/32

(54) **Procédé d'établissement d'une autorisation électronique pour un utilisateur porteur d'un document d'identité électronique et procédé de contrôle de ladite autorisation**

(71) Demandeur: Gemalto SA, 92190 Meudon (FR)
(72) Inventeur: Rouchouze, Bruno, 83270 St Cyr sur mer (FR); Vella Anthony, 13720 La Bouilladisse (FR)

(57) **Abrégé**

L'invention propose un procédé de création et de validation d'une demande d'autorisation numérique, ainsi que le procédé de contrôle de cette autorisation. Le procédé selon l'invention permet, grâce à une combinaison de signatures successives de garantir, à tout moment, l'identité du porteur, du document, et de l'organisme valideur.

## Description

L'invention concerne un procédé d'autorisation électronique.

L'invention porte en particulier sur l'établissement d'autorisations s'appuyant sur un document électronique.

De plus en plus de lieux se trouvent soumis à des autorisations d'accès. Ces lieux sont par exemple des zones confidentielles telles que des zones d'archivages informatiques, ou bien des zones considérées comme présentant un risque d'intrusion: zones aéroportuaires, zones politico/militaires.

Tous ces lieux nécessitent de savoir à tout moment qui est présent, et également être bien sur que les personnes présentes sont bien celles qui ont reçu l'autorisation d'y entrer.

Jusqu'à ce jour, il était relativement aisé de contrôler les documents d'identité que peut présenter une personne, et ainsi de s'assurer de son identité, il est beaucoup plus difficile de s'assurer qu'une autorisation correspond bien à une personne.

L'accroissement exponentiel des migrations de populations sur la planète entraine une circulation des documents d'identité, et rend un contrôle de la validité de ces documents difficile.

En, effet, dans un même pays, plusieurs types de documents peuvent être considérés comme document d'identité : un passeport, une carte d'identité, un permis de conduire, un livret de famille ..., il faut multiplier cette liste de document par autant de pays et de versions évolutives différentes dans chaque pays, ramené à des zones géographiques comme l'Europe cela fait donc plusieurs dizaines de document d'identité potentiels, à l'échelle mondiale cela donne plusieurs centaines de document parfaitement légaux.

Dans ce contexte il devient très difficile de vérifier qu'une autorisation à été délivrée sur la base de l'un ou l'autre de ces documents.

Différentes solutions peuvent être envisagées pour résoudre ce problème. Par exemple:
- Formation renforcée des agents de contrôle sur les différents types de documents d'identité existants,
- Validation en direct des documents d'identité auprès des entités responsables de la mise en oeuvre du document

Ces approches ne sont toutefois pas réalistes et difficilement applicables.

En effet la première nécessite une formation permanente afin d'étudier tout nouveau document d'identité émis mais également de connaître chaque risque ou faille potentielle révélée par rapport à chaque type de documents émis. La simple existence de plus de 120 modèles de permis de conduire dans les seuls 27 Etats membres de l'Union Européenne montre à quel point une telle approche serait difficilement concevable, d'autant plus à l'échelle mondiale.

La seconde approche est sujette à l'acceptation par les autorités émettrices à répondre en temps et en heure à une demande de validation d'un de ses documents émis. Cela nécessite, outre une connexion permanente entre tous les points de contrôle potentiels et tous les établissements émetteurs de documents, une approbation sécuritaire par une entité extérieure voir étrangère. Des risques subsistent, notamment liées aux échanges massifs d'information. Cela génère immanquablement des problèmes de gestion de la vie privée des individus (« privacy » en anglais).

De plus, la pluralité de documents pour un seul et même individu peut entrainer des situations à risque.

Il est parfaitement possible, par exemple, pour un individu, de prendre un vol international sur la base d'un document d'identité, et d'entrer dans son pays de destination sur la base d'un autre document. Cela est particulièrement vrai dans le cadre des doubles nationalités. Ainsi il est possible, pour un franco-américain, de décoller de Paris en présentant son passeport français, et d'atterrir a New-York en présentant son passeport américain.

Dans ce contexte l'autorisation d'embarquement, éditée sur la base du passeport français, devient caduque.

Tout point de contrôle n'est pas forcement suffisamment formé pour pouvoir vérifier la véracité d'un document d'identité. La fraude à l'identité peut donc être une réalité et occasionner des tords importants.

La présente invention propose de résoudre électroniquement cette faille potentielle de sécurité tout en apportant plus de confort d'utilisation à son porteur.

Pour cela, l'invention propose un procédé de création et de validation d'une demande d'autorisation numérique, ainsi que le procédé de contrôle de cette autorisation. Le procédé selon l'invention permet, grâce à une combinaison de signature successives de garantir, à tout moment, l'identité du porteur, du document, et de l'organisme valideur.

Plus précisément, l'invention décrit, dans un premier temps :
Un procédé d'établissement, d'une autorisation électronique liée à un document d'identité électronique dit eID, comportant au moins un couple de clé privées/publique dites UtilPriv et UtilPub, ainsi que un algorithme cryptographique asymétrique ASYM. Le document étant apte à communiquer avec un second dispositif électronique dit serveur comportant au moins un couple de clé privées/publique dites ServPriv et ServPub, ainsi que un algorithme cryptographique asymétrique ASYM.

Ce procédé comprend au moins les étapes de :
- création d'un « objet » numérique appelée eRequete,
- signature de la eRequete avec la clé UtilPriv et l'algorithme ASYM
- transmission de cette eRequette signée au serveur
- vérification de la signature de la eRequete, par le serveur, en utilisant la clé UtilPub, ainsi que l'algorithme ASYM
- génération, par le serveur d'un « objet » numérique appelée eAutorisation,
- Signature de cette eAutorisation par le serveur, avec la clé privée ServPriv et l'algorithme ASYM,
- transmission de cette eAutorisation signée, depuis le serveur, vers le document eID.

A réception de l'eRequete signée, le serveur peut l'enregistrer dans une mémoire non volatile.

L'eAutorisation signée peut être enregistrée dans une mémoire non volatile accessible par le document eID, par exemple dans une mémoire non volatile contenue dans le document eID.

L'eAutorisation signée peut être enregistrée dans une mémoire non volatile accessible par le serveur par exemple dans une mémoire non volatile contenue dans le serveur.

L'« objet » numérique appelée eAutorisation peut comporter tout ou partie des informations contenues dans l'eRequete, ainsi que au moins une information sur l'acceptation de cette demande.

Dans une étape préalable le porteur du document eID, peut s'être authentifié auprès du document eID, par exemple grâce à un code personnel.

Dans un second temps, l'invention d écrit un procédé de prise en compte d'une autorisation électronique eAutorisation, liée à un document d'identité électronique dit eID, comportant au moins un couple de clé privées/publique dites UtilPriv et UtilPub, ainsi que un algorithme cryptographique asymétrique ASYM, le document étant apte à communiquer avec un second dispositif électronique dit terminal comportant au moins un accès aux clés publiques, UtilPub, du document eID, et ServPub du couple ServPub/ServPriv d'un dispositif électronique tiers dit serveur, ainsi que un algorithme cryptographique asymétrique ASYM, l'eAutorisation étant signée avec ladite clé ServPriv, et comportant au moins une requête, signée avec la clé UtilPriv, ainsi que au moins une information sur l'acceptation de cette requête.

Le procédé comprend au moins les étapes de :
- transmission d'un objet eAutorisation, depuis le document eID vers le terminal,
- vérification de la signature de tout ou partie des données contenues dans l'eAutorisation avec la clé UtilPub ainsi que l'algorithme ASYM
- vérification de la signature de l'eAutorisation avec la clé ServPub ainsi que l'algorithme ASYM
- Analyse des informations contenues dans l'eAutorisation
- Décision d'avaliser ou non le contenu en fonction des résultats des vérifications.

D'autres caractéristiques et avantages de l'invention ressortiront clairement de la description qui en est faite ci-après, à titre indicatif et nullement limitatif, en référence aux dessins annexés dans lesquels :
- La figure 1 représente l'établissement d'une autorisation selon l'invention.
- La figure 2 représente la vérification d'une autorisation selon l'invention.

Dans la présente description, l'invention sera décrite dans le contexte particulier d'un accès à un avion. La présente invention s'applique de la même manière à tout type d'autorisation, que cette autorisation soit liée à un accès physique, ou un accès virtuel, par exemple l'accès à des documents électronique.

Le document d'identité électronique qui servira à illustrer le fonctionnement de l'invention dans la présente description peut être virtualisé.

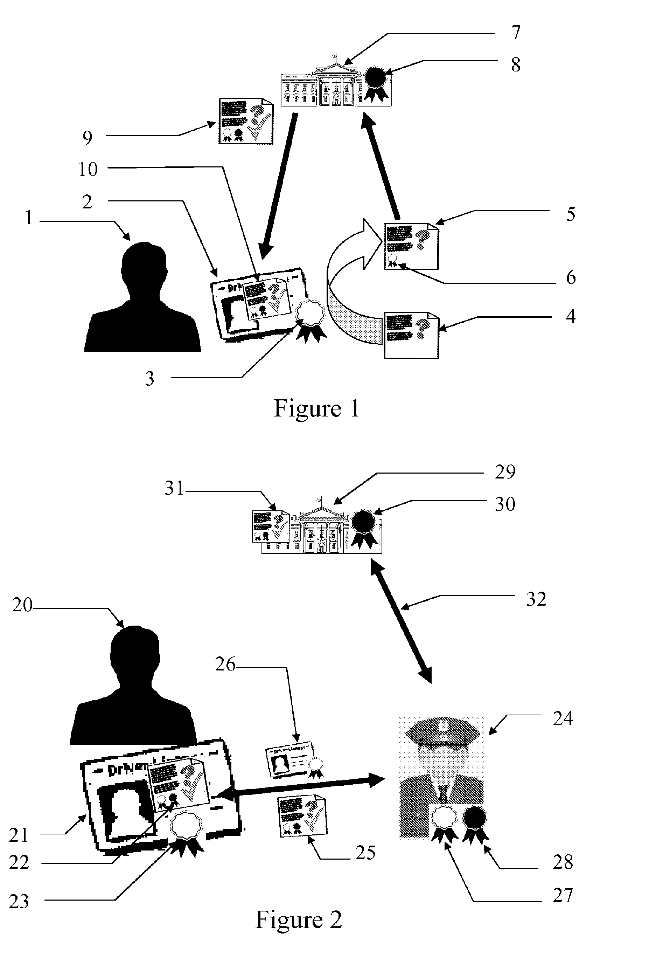

Dans la figure 1, un individu 1 demande à accéder à un avion. Pour cela, lors de l'enregistrement, au guichet de l'aéroport, l'usager 1 présente un passeport 2, muni d'une puce électronique, contenant au moins un certificat PKI 3.

La borne d'enregistrement prépare, en fonction des données présentes sur le billet de l'usager, une demande d'autorisation d'embarquement 4. Cette demande comporte entre autre le numéro de vol, la place réservée, les horaires, ainsi que les lieux de décollage et d'atterrissage. Cette demande d'autorisation d'embarquement est envoyée à la puce du passeport 2, qui la signe. Cette signature se fait en utilisant un algorithme cryptographique, et une clé.

La borne d'embarquement fait office de relais entre le document électronique et les autres acteurs du système. Dans le cas ou le document d'identité est matérialisé par un dispositif électronique communicant (téléphone mobile, ou agenda électronique communicant ...), ou embarqué dans un tel dispositif, sa présence est inutile.

Dans un mode préféré d'implémentation de l'invention, l'algorithme utilisé est un algorithme asymétrique, par exemple le RSA (pour Rivest, Shamir et Adleman).

La cryptographie asymétrique, ou cryptographie à clé publique est fondée sur l'existence de fonctions à sens unique.

Ainsi, la cryptographie à clé publique est un procédé asymétrique utilisant une paire de clés. Ces clés, généralement baptisées « clé publique » et « clé privée », sont construites de telle manière que, ce qui est chiffré avec l'aide d'une de ces clés ne peut être déchiffré que par la seconde.

Le principe est donc de distribuer la clé publique tout en conservant secrète la clé privée. Tout utilisateur possédant une copie de la clé publique pourra chiffrer des informations que seul le propriétaire de la clé privée pourra déchiffrer.

On peut noter qu'il est impossible de deviner la clé privée à partir de la clé publique.

La génération des couples clé publique/clé privée, ne fait pas l'objet de la présente invention. Tous les procédés décrits par l'état de l'art, ou à venir, qui permettent d'obtenir un tel couple de clé s'appliquent à la présente invention.

Ainsi dans le cas d'implémentation illustré dans la figure 1, le passeport 2 contient, dans sa puce électronique, au moins un algorithme cryptographique asymétrique, ainsi que la clef publique et privées de l'utilisateur 1. La signature 6 se fait en utilisant cet algorithme et la clef privée 3 de l'utilisateur.

Cette demande d'autorisation d'embarquement est envoyée à un tiers de confiance 7.

Ce tiers de confiance, aussi appelé serveur de par sa position dans le système. Dans la suite du document, les expressions « tiers de confiance » et « serveur » désignent toutes deux indifféremment cette même entité.

Dans notre contexte de l'embarquement, ce tiers de confiance peut avantageusement être une entité de la police de l'air et des frontières, ou bien des douanes. Ce tiers de confiance a comme mission de valider ou non l'autorisation d'embarquement, et d'estampiller cette autorisation.

Ce tiers de confiance doit posséder en outre son propre moyen de signature électronique, ainsi que des moyens pour vérifier les signatures électroniques, par exemple des usagers.

Dans le mode d'implémentation basé sur un schéma cryptographique asymétrique, ce tiers de confiance doit posséder son propre jeu de clefs privée/publique, mais également les clefs publique des usagers.

Dans un autre mode d'implémentation, l'invention peut s'appuyer sur un schéma cryptographique à clef secrète (aussi appelé schéma cryptographique symétrique).

La cryptographie symétrique, ou cryptographie à clé secrète est basée sur la connaissance partagée d'un secret entre deux acteurs.

Les algorithmes utilisés, tels que par exemple le DES, 3DES, AES, ... s'appuient sur le fait qu'il est presque impossible, connaissant le chiffré d'un message, de retrouver le message clair sans connaitre la clé utilisée pour le chiffrement.

Le rôle crucial que joue la clé dans ces schémas justifie la mise en oeuvre de nombreux mécanismes satellites afin d'en assurer la confidentialité.

Dans notre contexte de l'embarquement, ce schéma impose que le tiers de confiance et le passeport électronique de l'usager partagent un secret. Il est fortement recommandé que ce secret soit limité à un seul utilisateur, et qu'il ne soit pas le même pour plusieurs usagers.

Dans un mode préféré d'implémentation de l'invention, préalablement à la construction de la demande d'autorisation, la puce électronique du passeport 2 de l'usager entre en contact direct avec le tiers de confiance 7, et s'authentifie auprès de lui. Cette authentification a pour but de prouver la validité du document présenté, ainsi que la légitimité de son possesseur. Des certificats électroniques peuvent servir à authentifier le document présenté, l'usage potentiel d'un élément extérieur, par exemple un code secret, peut permettre de légitimer le porteur.

Cette authentification peut se faire avec l'un quelconque des algorithmes d'authentification connus de l'homme de l'art.

Une fois la demande d'autorisation 4 finalisée, et sa signature par le composant électronique du passeport 2, on obtient une demande d'autorisation signée 5. Cette demande doit être transmise au tiers de confiance 7 pour validation.

Si ce tiers de confiance est en possession de moyens lui permettant de vérifier la validité de la signature 6, il le fait. Cette opération permet, non seulement de vérifier l'identité du signataire (ou tout au moins du passeport 2), mais également de vérifier que la demande 5 n'a fait l'objet d'aucune modification depuis sa signature. En effet, si tout ou partie du document 5 a été modifié, la signature électronique 6 deviendra caduque.

Si la vérification de cette signature 6 est correcte, le tiers de confiance 7 étudie le contenu de la demande d'autorisation 5, et prend une décision. Dans l'illustration fait dans la figure 1, le tiers de confiance accepte la demande d'embarquement. Son accord est notifié sur la demande d'autorisation, qui, par la même devient une autorisation valide 9. Cette autorisation est signée à son tour par le tiers de confiance, et retournée au composant électronique du passeport 2, qui l'enregistre 10.

Dans un mode particulièrement intéressant d'implémentation, le tiers de confiance conserve, dans une mémoire non volatile, une copie de l'autorisation valide 9.

Cette autorisation a été établie en fonction d'un usager 1, d'un document d'identité électronique 2, d'un contenu 4 et d'un tiers de confiance 7.

Ces quatre éléments sont inextricablement liés dans l'autorisation 10. La force de cette autorisation réside entre autre dans le fait que lors de toute vérification ultérieure, il sera aisé de vérifier chacun de ces quatre paramètres.

La figure 2 illustre la vérification d'une autorisation 22, par un agent 24.

Cet agent peut être une personne physique comme un agent de sécurité, ou bien un module automatisé, par exemple un programme d'ordinateur ou un module électronique (borne de contrôle). Dans tous les cas, cet agent doit être en possession de muni d'un dispositif électronique (dit terminal) capable de lire les composantes électroniques du passeport 21.

Dans notre exemple d'implémentation de l'embarquement, ce contrôle peut être réalisé au moment de monter a bord de l'avion, ou au débarquement. La suite se focalisera sur l'exemple du contrôle au débarquement d'un avion.

L'usager 20 doit, pour pouvoir débarquer de son avion, présenter son autorisation valide. Pour cela, il présente 26 à l'agent 24 son document d'identité 21 muni d'un composant électronique, et, enregistré dans une mémoire non volatile, possédant une autorisation valide 22 établie conformément à l'invention.

L'agent 24 extrait 25 l'autorisation 22, ainsi que les moyens 27 de vérifier la signature de l'usager, apposée sur l'autorisation 22.

Une authentification est demandée à l'usager, afin de prouver la légitimité de porteur, ainsi que la validité de son document d'identité 21. L'agent 24 peut désormais vérifier la validité de la signature présente sur l'autorisation. Dans le cas ou cette vérification se fait correctement, l'agent 24 a désormais la certitude que l'autorisation n'a pas été modifiée, et qu'elle a bien été établie avec l'aide du document 21 présenté, et par le porteur 20.

Cela permet de résoudre le cas ou un usager est en possession de plusieurs documents d'identité, et débarque avec un document différent de celui présenté lors de l'embarquement.

L'agent 24 doit désormais vérifier la signature apposée sur l'autorisation par le tiers de confiance qui a délivré cette autorisation. Plusieurs possibilités, soit il est en possession d'un moyen 28 de vérifier cette signature par lui même, soit il est en contact avec un tiers de confiance 29, possédant de tels moyens 30 de vérification. Nous noterons que ce tiers de confiance n'est pas forcément identique à celui, illustré dans la figure 1, qui a délivré cette autorisation. Dans la majorité des cas, ces tiers de confiance sont des entités indépendantes les unes des autres, mais possédant des accords qui assurent une confiance réciproque.

Afin d'obtenir un niveau optimal de sécurité, tous les échanges entre les différents acteurs électroniques peuvent être sécurisés en appliquant les mécanismes bien connus de l'homme de l'art. Notamment l'établissement de canaux sécurisés.

## Revendications

1. Procédé d'établissement, d'une autorisation électronique (9) liée à un document d'identité électronique (2) dit eID, comportant au moins un couple de clé privées/publique (3) dites UtilPriv et UtilPub, ainsi que un algorithme cryptographique asymétrique ASYM, ledit document étant apte à communiquer avec un second dispositif électronique (7) dit serveur comportant au moins un couple de clé privées/publique (8) dites ServPriv et ServPub, ainsi que un algorithme cryptographique asymétrique ASYM,
**Caractérisé en ce que** le procédé comprend au moins les étapes de :
- création d'un « objet » numérique (4) appelée eRequete,
- signature (6) de ladite eRequete (4) avec ladite clé UtilPriv (3) et ledit algorithme ASYM,
- transmission de ladite eRequete signée audit serveur (7),
- vérification de la signature (6) de ladite eRequete (5), par ledit serveur (7) en utilisant ladite clé UtilPub, ainsi que ledit algorithme ASYM
- génération, par ledit serveur d'un « objet » numérique (9) appelée eAutorisation,
- Signature de cette eAutorisation (9) par ledit serveur (7), avec ladite clé privée (8) ServPriv et ledit algorithme ASYM,
- transmission de ladite eAutorisation (9) signée, depuis ledit serveur (7), vers ledit document eID (2).

2. Procédé selon la revendication 1, **caractérisé en ce que**, à réception de ladite eRequete signée (5), ledit serveur (7) l'enregistre dans une mémoire non volatile.

3. Procédé selon la revendication 1, **caractérisé en ce que**, ladite eAutorisation (9) signée est enregistrée dans une mémoire non volatile accessible par ledit document eID (2).

4. Procédé selon la revendication 3, **caractérisé en ce que**, ladite mémoire non volatile est contenue dans ledit document eID (2)

5. Procédé selon la revendication 1, **caractérisé en ce que**, ladite eAutorisation (9) signée est enregistrée dans une mémoire non volatile accessible par ledit serveur (7).

6. Procédé selon la revendication 5, **caractérisé en ce que**, ladite mémoire non volatile est contenue dans ledit serveur (7).

7. Procédé selon la revendication 1, **caractérisé en ce que**, ladite eAutorisation (9) comporte tout ou partie des informations contenues dans ladite eRequete (5), ainsi que au moins une information sur l'acceptation de cette demande.

8. Procédé selon la revendication 1, **caractérisé en ce que**, dans une étape préalable le porteur (1) dudit document eID (2), s'authentifie auprès dudit document eID (2).

9. Procédé selon la précédente, **caractérisé en ce que**, ladite authentification se fait grâce à un code personnel.

10. Procédé de prise en compte d'une autorisation électronique eAutorisation (22), liée à un document d'identité électronique (21) dit eID, comportant au moins un couple de clé privées/publique (23) dites UtilPriv et UtilPub, ainsi que un algorithme cryptographique asymétrique ASYM, ledit document étant apte à communiquer avec un second dispositif électronique (24) dit terminal comportant au moins un accès aux clés publiques, UtilPub (27), dudit document eID (21), et ServPub (28) du couple ServPub/ServPriv (30) d'un dispositif électronique tiers (29) dit serveur, ainsi que un algorithme cryptographique asymétrique ASYM, ladite eAutorisation (22) étant signée avec ladite clé ServPriv, et comportant au moins une requête, signée avec ladite clé UtilPriv, ainsi que au moins une information sur l'acceptation de cette requête,
**caractérisé en ce que** le procédé comprend au moins les étapes de :
- transmission d'un objet eAutorisation (22), depuis ledit document eID (21) vers ledit terminal (24),
- vérification de la signature de tout ou partie des données contenues dans ladite eAutorisation (22) avec ladite clé UtilPub (27) ainsi que ledit algorithme ASYM,
- vérification de la signature de ladite eAutorisation (22) avec ladite clé ServPub (28) ainsi que ledit algorithme ASYM,
- Analyse des informations contenues dans ladite eAutorisation (22),
- Décision d'avaliser ou non ledit contenu en fonction des résultats des dites vérifications.
